# EUROPEAN PATENT APPLICATION

(11) **EP 0 661 574 A2**
(43) Date of publication of application: **05.07.1995**
(21) Application number: 94309735.2
(22) Date of filing: 23.12.1994
(51) Int. Cl.: G02B 27/00

(54) **Helmet mounted display combiner assembly**

(30) Priority: 23.12.1993 US 173543
(71) Applicant: HONEYWELL INC., Minneapolis Minnesota 55408 (US)
(72) Inventor: Knowles, Gary R., Arden Hills, Minnesota 55112 (US)
(74) Representative: Fox-Male, Nicholas Vincent Humbert

(57) **Abstract**

A helmet mounted display utilizes a solid combiner block (30) to superimpose a display image upon the remote image visible to an observer. Due to the optical characteristics of the solid combiner block, the exit pupil is moved farther away from the display system than if the display image was transmitted through air. This allows the observer to position their eye at this exit pupil and clearly see the display image. Furthermore, this allows the ability to utilize this display system when it is necessary to wear goggles or glasses.

## Description

### FIELD OF THE INVENTION

The present invention relates to a helmet mounted display system. More specifically, the invention relates to a helmet mounted display system which directs a display image into the eye of an observer. In conjunction with the reflection of a display image into the observer's eye, the observer is further allowed to view objects at a remote distance.

### BACKGROUND OF THE INVENTION

Helmet mounted display units allow an observer to view display information while simultaneously viewing remote objects. This allow easy access to display information while also easily focusing upon remote objects such as the surrounding terrain or targets. One such application for a helmet display system is for use by the pilot of an aircraft such as a helicopter or airplane.

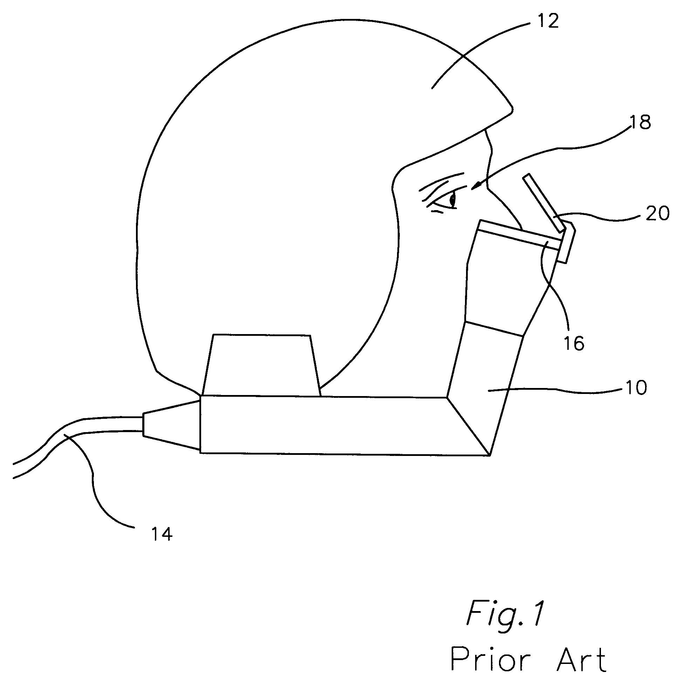

Various prior art methods exist to accomplish this type of display system. Referring to Figure 1, there is shown one prior art method wherein a helmet mounted display generator 10 is attached to the helmet 12 of an observer. Display generator 10 receives a display from an external system (not shown) through cabling 14 which is attached to display generator 10. A collimated display image is generated by an objective lens 16 which is situated adjacent to the observer's eye. The display image is then projected upon a flat glass combiner 20 which is attached to display generator 10. Flat glass combiner 20 is partially reflective which allows the display image projected by objective lens 16 to be reflected into the observer's eye while also allowing the observer to view objects opposite flat glass combiner 20. In other words, the observer is allowed to look through flat glass combiner 20.

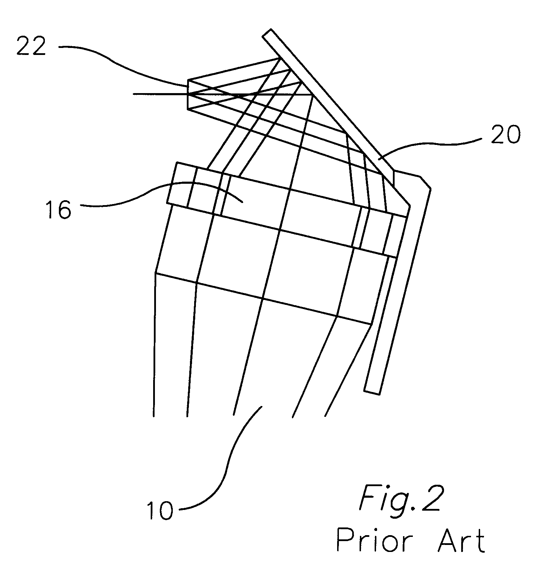

Referring now to Figure 2, there is shown a more detailed drawing illustrating the function of flat glass combiner 20. The collimated display image generated by objective lens 16 is projected towards the surface of flat glass combiner 20. These optical signals travel through the air gap between objective lens 16 and flat glass combiner 20. Reflections off of flat glass combiner 20 present the display image at an exit pupil 22 which is situated to be at a position in which the observer's eye can be placed. As can be seen from Figure 2, exit pupil 22 is very close to display generator 10, thus making it very difficult for the observer to get his eye in the position of exit pupil 22. Interference can be caused from the observer's cheeks or eyebrows, or both, thus not allowing him to get his eye close enough to the display generator 10. Furthermore, if the observer is required to wear any type of glasses or masks, it would be utterly impossible for the observer to get his eye in the position of exit pupil 22.

Other prior art methods of projecting a display image into the eye of an observer while also allowing the observer to view objects a remote distance away from the display have been attempted. Many of these methods include more complex optics which achieve similar results; however, are far more complicated. An example of another embodiment for a helmet mounted display is shown in U.S. Patent 4,859,030 to Rotier. As shown in the Rotier patent, numerous optical elements are utilized to reflect the optical image off a number of elements, ultimately directing it towards an observer's eye. Other prior art attempts to achieve a helmet mounted display include reflecting images from a visor and many other complicated projection systems.

It is always a concern when designing a helmet mounted display system that the fewest elements possible be used in order to keep the overall weight of the display system to a minimum. Helmet sighting systems, due to their attachment to flight helmets along with numerous other helmet systems, add to the weight of the helmet. Remembering that the helmet must be supported by the pilot, weight is always an important concern.

### SUMMARY OF THE INVENTION

It is an object of the present invention to provide a helmet mounted display system for superimposing a display image upon a remote image being viewed by an observer. It is a further object of the invention to configure this display system such that the exit pupil is a sufficient distance from the display system to allow the observer to easily position their eye to allow easy viewing of the display image.

It is another object of the present invention to provide a display system which allows the observer to wear any necessary glasses or goggles while still viewing the display image. This object can be achieved due to the placement of the exit pupil a sufficient distance from the display system.

The present invention provides an optical combiner for use with a helmet mounted display system wherein the display system provides a display image along an optical display axis, the optical combiner characterised by a combiner block of optically transmissive material having a first receiving surface positioned substantially perpendicular to the optical display axis for receiving the display image and allowing the display image to be transmitted into the combiner block, the combiner block having a combining surface situated such that the optical display axis intersects the combining surface, the combining surface for receiving the display image directly from the display system and causing the display image to be reflected along a sight axis, the combiner block further having an exit surface and a second receiving surface, both being situated such that the sight axis intersects these two surfaces in a substantially perpendicular manner, the exit surface being positioned so as to receive the display image directly from the combining surface along the sight axis and the second receiving surface being situated along the sight axis and opposite from the exit surface.

The helmet mounted display system of the present invention utilizes a display generating device which generates a display image and presents it to a position adjacent the observer's eye and line-of-sight. This display image is projected into a solid combiner block which allows for reflection of the display image back towards the observer's eye while also allowing the observer to view objects by looking through the solid combiner block. By appropriately choosing material to make up the solid combiner block and appropriately placing an image combining surface within the solid combiner block, the exit pupil is formed a sufficient distance from the display apparatus to allow the observer to conveniently view the display image. In order to move the exit pupil this distance from the display apparatus, full advantage is taken of the differences in the indices of refraction of the combiner elements making up the display system. Specifically, the index differences of the air gap and the solid combiner block. This change in index of refraction causes appropriate diffraction to the path traveled by the display image and results in the exit pupil being formed a sufficient distance from the display apparatus.

### DETAILED DESCRIPTION OF THE DRAWINGS

Further objects and advantages of the present invention can be seen by reading the following detailed description in conjunction with the drawings in which:
Figure 1 is an illustration of a prior art helmet display utilizing a flat glass combiner, showing its attachment to a helmet and relationship to an observer's eye;
Figure 2 is a more detailed illustration showing the optical configuration of the flat glass combiner;
Figure 3 is an illustration of the helmet mounted display system of the present invention utilizing a solid combiner block;
Figure 4 is a more detailed drawing showing the optical characteristics of the solid combiner block; and
Figure 5 is an illustration showing the relationship between an observer's line-of-sight and the display system of the present invention.

### DETAILED DESCRIPTION OF THE INVENTION

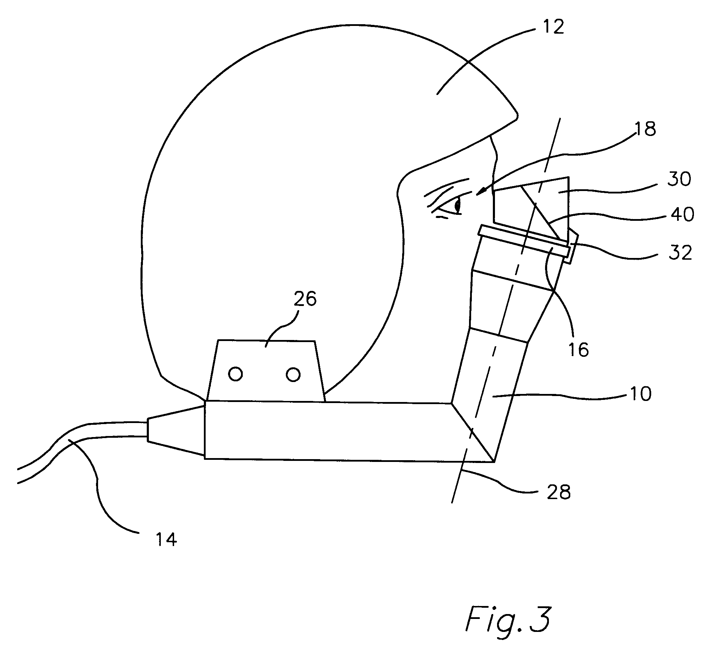

Referring now to Figure 3, there is shown a diagram illustrating the improved helmet display system of the present invention. To maintain consistency throughout the application like reference numerals are used to designate like elements. Attached to a helmet 12 is a display generator 10. Display generator 10 is attached through an attachment mechanism 26 to one side of helmet 12. Display generator 10 is attached to an external system (not shown) via a cabling 14 and generates a display image through the use of relay optics and collimating optics contained in display generator 10. The display image is projected out of objective lens 16. The collimating optics and relay optics are not shown in FIG. 3, however, this configuration is well known in the art. The display image is presented along an optical display axis 28 of display generator 10. This display image may comprise flight information; however, many types of information can be displayed. Furthermore, multiple display generators could be used by appropriate attachment to both sides of the helmet.

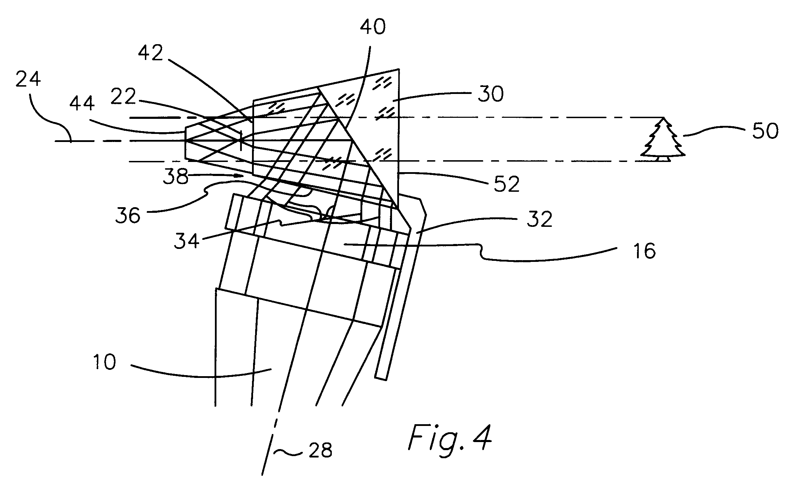

Attached to display generator 10 and positioned adjacent to objective lens 16 is a solid combiner block 30. Referring now to Figure 4, there is shown a more detailed description of solid combiner block 30 and its optical characteristics in conjunction with display generator 10. Referring simultaneously to Figures 3 and 4, it can be seen that solid combiner block 30 is attached to display generator 10 by an adjustable combiner mount 32. Adjustable combiner mount 32 allows solid combiner block 30 to be adjusted up and down to properly align the display system to the wearers eye position. As previously mentioned, a display image is generated by objective lens 16 and is projected towards solid combiner block 30. In Figure 4 numerous display image rays 34 from the display image are projected upwards and away from objective lens 16 to illustrate the optics of the present system. The display image is projected along optical display axis 28 upon a receiving surface 36 of solid combiner block 30. Receiving surface 36 allows the display image to be transmitted into solid combiner block 30. It will be recognized that due to the difference in the index of refraction for the air gap 38 between receiving surface 36 and objective lens 16 and the index of refraction of solid combiner block 30, a certain amount of refraction occurs when the display image rays 34 of the display image enter solid combiner block 30. This refraction causes the optical exit pupil to be formed a greater distance from objective lens 16 than in the case wherein the display image rays 34 pass through air.

While display image rays 34 are traveling through solid combiner block 30, they eventually encounter a combining surface 40. Combining surface 40 is configured such that display image rays 34 are reflected so as to travel along a sight axis 24. As with any reflective surface, the angle of incidence is substantially equivalent for both the incident and reflected rays. As will be seen and described more fully at a later point in the present application, combining surface 40 is also partially transmissive to allow some optical signals to be passed therethrough. Wavelength selective or polarization sensitive coatings may be applied to combining surface 40 to achieve desired optical characteristics. Specifically, these coatings may help to improve the brightness of the display image while minimizing the loss in brightness of the scene transmitted through solid combiner block 30.

Following the reflection of display image rays 34 off of combining surface 30, these rays travel along sight axis 24 towards an exit surface 42. Exit surface 42 is positioned to receive the reflected display image rays 34 and transmit them to a desired optical exit pupil 44. Optical exit pupil 44 is positioned along sight axis 24 and away form exit surface 42. As with receiving surface 36, a certain amount of refraction occurs at exit surface 42, thus causing display image rays 34 to converge upon an optical exit pupil 44. As can be seen by comparing Figure 4 with Figure 2, optical exit pupil 44 (the resulting optical exit pupil when solid combiner block 30 is used) is a greater distance away from a display system than was exit pupil 22 (the resulting optical exit pupil when flat glass combiner 20 is used). Moving optical exit pupil 44 away from the display system allows the observer to position their eye in an appropriate position to view the display image. Exit pupil 22 resulting from the use of a flat glass combiner is shown in Figure 4 to illustrate the relative position of optical exit pupil 44 (when solid combiner block 30 is utilized) and exit pupil 22 (when flat glass combiner 20 is utilized).

While the display system of the present invention allows the display image presented by display generator 10 to be projected to optical exit pupil 44 and an observer's eye 18, the present display also allows object images a remote distance from the display system to be viewed through solid combiner block 30. For illustrative purposes, a tree 50 is shown as an object image. The optical outline of tree 50 is projected towards solid combiner block 30 and encounters a second receiving surface 52. The optical image of tree 50 is then projected into solid combiner block 30 and encounters combining surface 40. Due to the partially reflective and partially transmissive nature of reflective surface 30, the optical outline of tree 50 is passed through combining surface 40 and transmitted towards exit surface 42. Upon encountering exit surface 42, the optical image of tree 50 is transmitted out of solid combiner block 30 and toward the observer's eye 18. Therefore, the observer is simultaneously able to focus on either the display image or the image of a remote object positioned opposite solid combiner block 30 from the observer's eye.

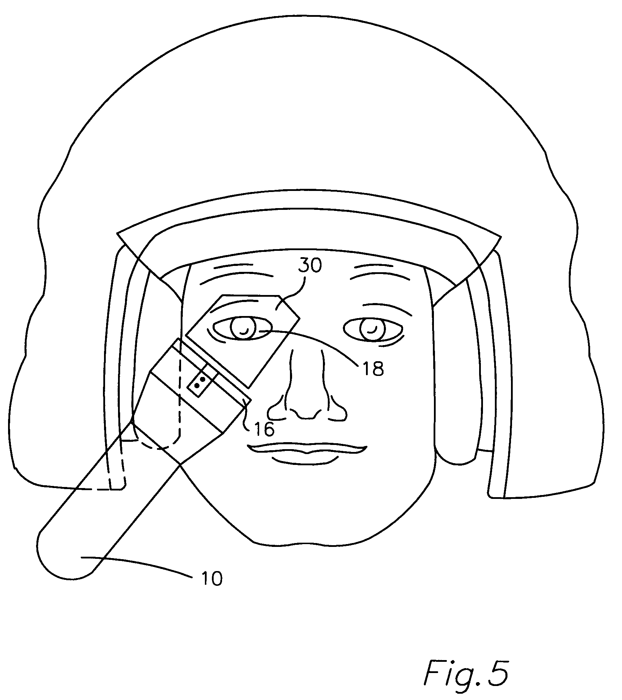

Referring now to Figure 5, there is shown a front view of the display system of the present invention illustrating the placement of solid combiner block 30 in front of an observer's eye 18. By appropriately focusing the image generator, the observer can view information directed therein from display generator 10,
superimposed upon objects remote from the display system.

Having described the present invention in considerable detail, it should be apparent to those skilled in the art that the invention can be modified in arrangement and detail without departing from the principles of the invention.

## Claims

1. An optical combiner for use with a helmet mounted display system wherein the display system provides a display image along an optical display axis, the optical combiner characterised by a combiner block (30) of optically transmissive material having a first receiving surface (36) positioned substantially perpendicular to the optical display axis for receiving the display image and allowing the display image to be transmitted into the combiner block, the combiner block having a combining surface (40) situated such that the optical display axis intersects the combining surface, the combining surface for receiving the display image directly from the display system and causing the display image to be reflected along a sight axis, the combiner block further having an exit surface (42) and a second receiving surface (52), both being situated such that the sight axis intersects these two surfaces in a substantially perpendicular manner, the exit surface being positioned so as to receive the display image directly from the combining surface along the sight axis and the second receiving surface being situated along the sight axis and opposite from the exit surface.

2. An optical combiner according to Claim 1 characterised in that the combining surface (40) is partially reflective and partially transmissive so as to allow an object image which is received at the second receiving surface (52) to be transmitted along the sight axis and out of the exit axis.

3. An optical combiner according to Claim 1 or 2 characterised in that the combining surface (40) is positioned at the intersection of the optical display axis and the sight axis.

4. A helmet mounted display system characterised by:
a projection system for producing a display image, and presenting the display image along a optical display axis;
combiner means positioned (30) along the optical display axis for reflecting the display image into the observer's line of sight, the combiner means being a solid block of optically transmissive material having an interior combining surface positioned to receive the display image along the optical display axis directly from the projection system and reflect the display image into the observer's line of sight.

5. A helmet mounted display system according to Claim 4 characterised in that the combiner means (30) is a solid prism having a receiving surface (36) positioned substantially perpendicular to the optical display axis, and an exit surface (42) substantially perpendicular to the observer's line of sight and positioned between the combiner means and the observer's eye so as to receive the reflected display image, the combiner means further having a second receiving surface substantially perpendicular to the observer's line of sight and disposed on a surface of the combiner opposite means from the observer's eye.

6. A helmet mounted display system according to Claim 4 or 5 characterised in that the combiner means (30) is adjustably attached to the projection system to allow the combiner means to be positioned in the observer's line of sight.

7. A helmet mounted display system according to any of Claims 4 to 6 characterised in that the combiner means (30) has a first receiving surface positioned adjacent to and substantially perpendicular to the optical display axis so as to receive the display image and allow the display image to be transmitted to the image combining surface.

8. A helmet mounted display system according to any of Claims 4 to 7 characterised in that the combiner means has an exit surface positioned to receive the display image following its reflection off of the image combining surface and transmit the display image out of the combiner means.

9. A helmet mounted display system characterised by:
a display image generating means for creating the display image and presenting the display image along an optical display axis; and
solid combiner means (30) for receiving the display image from display image generating means and directing the display image into the observer's eye, the solid combiner means having a receiving surface (36) positioned substantially perpendicular to the optical display axis for receiving the display image and allowing the display image to be transmitted into the combiner means, an image combining surface (40) within the solid combiner means for receiving the display image directly from the receiving surface and directing it toward an exit surface, the exit surface positioned adjacent the observer's eye thus allowing the display image to be directed into the observer's eye, the image combining surface and the solid combiner means configured such that an exit pupil of the display is positioned away from the exit surface.

10. A helmet mounted display system according to Claim 9 characterised in that the solid combiner is semi-transparent thus allowing the observer to see images through the combiner means by looking into the exit surface and through the image combining surface.

11. A helmet mounted display system according to Claim 9 or 10 characterised in that the exit surface is further positioned to be intersected by the observer's line of sight.

12. The helmet mounted display system according to any of Claims 9 to 11 characterised in that the combiner means has a second receiving surface positioned to receive external images and allow them to be transmitted through the combiner means to the exit surface.

13. A helmet mounted display according to any of Claims 9 to 12 characterised in that the image combining surface receives external images at a second side of image combining surface which allows the external image to be transmitted through the image combining surface.

14. A helmet mounted display system according to any of Claims 4 to 13 characterised in that the image combining means receives the display image at a first side of the image combining surface which causes the display image to be reflected along the observer's line of sight.

15. A helmet mounted display system according to Claim 14 characterised in that the image combining surface receives an object image at a second side of image combining surface which allows the object image to be transmitted through the image combining surface.

16. A helmet mounted display system characterised by:
image producing means for generating an electrical signal indicative of a display image;
display image generating means for receiving the electrical signal from the image producing means and producing a display image and presenting the display image along an optical display axis; and
solid combiner means adjustably attached to the display image generating means and disposed in front of the display image generating means and along the optical display axis, the solid combiner means having a first receiving surface positioned substantially perpendicular to the optical display axis to receive the display image and allow the display image to be transmitted into the solid combiner means, the solid combiner means further having an image combining surface imbedded within the solid combiner means, the image combining surface positioned to directly receive the display image transmitted through the first receiving surface such that the display image is not reflected until it reaches the image combining surface and reflecting the display image, the solid combiner means also having a exit surface positioned to transmit the display image out of the solid combiner means and toward the observer, the receiving surface, the image combining surface and the exit surface all cooperating to transpose the display image from the display image generating means to an exit pupil which is located adjacent the exit surface, the solid combiner means further allowing an object image to be transmitted through the solid combiner means from opposite the observer, the object images being transmitted through a second receiving surface substantially parallel to the exit surface, the object image transmitted through the solid combiner means, including being transmitted through the image combining surface, and out of exit surface.

17. A helmet mounted display of according to Claim 16 characterised in that wherein the display image generating means is attached to an observer's helmet.
